# FASCICULE DE BREVET EUROPEEN

(11) **EP 0 682 624 B1**
(45) Date de publication et mention de la délivrance du brevet: **26.04.2000**
(21) Numéro de dépôt: 94906254.1
(22) Date de dépôt: 09.02.1994
(51) Int. Cl.: B65D 41/34, B29C 45/44

(54) **CAPSULE DE BOUCHAGE A VIS AVEC BANDE DE GARANTIE**
SCHRAUBVERSCHLUSSKAPPE MIT ORIGINALITÄTSBAND
SCREW-TOP CLOSURE WITH A TAMPER-EVIDENT STRIP

(30) Priorité: 09.02.1993 FR 9301410; 10.06.1993 FR 9307012
(43) Date de publication de la demande: 22.11.1995
(73) Titulaire: LE MOULAGE AUTOMATIQUE (Société anonyme), F-02400 Château-Thierry (FR)
(72) Inventeur: CARVALHEIRO, José, F-75012 Paris (FR); FRANCHET, Alain, F-02400 Brasles (FR); GUERRAZZI, Vincent, F-01500 Ambérieux-en-Bugey (FR); PELLERANO, Pierre, F-75010 Paris (FR)
(74) Mandataire: Derambure, Christian
(86) Numéro de dépôt international: FR9400144
(87) Numéro de publication internationale: WO9418084

(56) Documents cités:
- EP-A- 0 355 235
- CA-A- 1 279 608
- CH-A- 669 556
- DE-U- 9 208 944
- GB-A- 1 134 894
- GB-A- 2 255 553
- US-A- 4 890 754

## Description

L'invention concerne un dispositif de bouchage pour récipient comprenant un bouchon taraudé raccordé ou prolongé en partie inférieure par une bande ou bague d'inviolabilité reliée au bouchon par une zone de liaison frangible, c'est-à-dire à faible résistance mécanique, cette bague d'inviolabilité présentant intérieurement une saillie annulaire.

En pratique, ce type de dispositif de bouchage, ou capsule, souvent en matière plastique moulée, est adapté (e) pour que son taraudage de bouchon puisse venir se visser sur le col fileté d'un récipient, de telle sorte que, lors de la mise en place d'origine du dispositif, sa bague de sécurité ou "d'inviolabilité" vienne se verrouiller sous une collerette en saillie formée extérieurement sur le col du récipient, en dessous de son filetage.

Les parties formant respectivement bouchon et bague étant reliées par la zone frangible précitée, qui s'étend normalement sensiblement régulièrement tout autour du dispositif et donc du col du récipient une fois le dispositif de bouchage installé, l'utilisateur, lorsqu'il dévisse pour la première fois le bouchon, vient rompre ou déchirer par torsion, traction et cisaillement cette zone frangible, marquant ainsi l'évidence de cette première ouverture.

Toutefois dans la pratique, le verrouillage, avant première ouverture de la bague de sécurité sous la collerette du récipient est souvent assez relatif compte tenu de la forme habituelle donnée à la saillie interne de la bande, l'expérience montrant que pratiquement seules les saillies formant un cran intérieur peu prononce sont relativement aisées à démouler, de tels crans n'assurant toutefois pas pleinement leur rôle une fois en place sur le récipient.

Il est connu notamment par le US 4 890 754 (DORN ET AL) un dispositif de bouchage du type énoncé dans le préambule de la revendication te dispositif pour recipient à collerette saillante comprend un bouchon taraudé prolongé en partie inférieure par une bague d'inviolabilité reliée au bouchon par une zone de liaison à faible résistance mécanique, ladite bague comportant une bande annulaire déformable de jonction délimitée en partie inférieure par une saillie annulaire interne dont la face supérieure est normale ou sensiblement normale à l'axe du dispositif et en partie supérieure par une saillie annulaire externe disposée à un niveau intermédiaire entre ladite saillie interne et ladite zone de liaison à faible résistance mécanique, cette saillie annulaire externe présentant une face supérieure proche du bouchon faisant un angle aigu par rapport à l'axe du dispositif.

L'invention a pour objet de proposer un dispositif de bouchage qui puisse, en toute fiabilité, être moulé puis mis en place avec un engagement bien guidé du cran d'accrochage de la bague, sans risque de déchirement de la zone de liaison frangible, ce cran, une fois verrouillé, demeurant effectivement sous la collerette du récipient au moins jusqu'à la première ouverture, limitant ainsi largement les risques actuels d'ouverture frauduleuse.

A cet effet, l'invention se rapporte à un dispositif ou capsule de bouchage tel que défini dans la revendication 1

Le moulage des capsules plastiques entrainant habituellement quelques difficultés de réalisation, notamment lors du démoulage, l'invention propose en outre une solution à ces problèmes dans le cadre d'un procédé perfectionné de moulage par injection au moyen d'un moule présentant une cavité reproduisant l'empreinte en creux de la capsule de l'invention.

Selon ce procédé, après avoir moulé en une seule pièce la capsule en question avec son bouchon et sa bague de sécurité, on réalise au cours du démoulage, les opérations suivantes :
- on écarte de la paroi extérieure en regard de la bague d'inviolabilité, une première pièce extérieure du moule s'étendant depuis un niveau inférieur au bord inférieur libre de ladite bague jusqu'à un niveau intermédiaire entre ceux des saillies interne et externe de cette même bague ;
- on exerce un couple sur la bague tendant à faire pivoter vers l'extérieur sa dite saillie annulaire interne d'accrochage, grâce à une seconde pièce du moule alors plaquée contre la paroi extérieure de la bague d'inviolabilité située entre ledit niveau supérieur de la première pièce de ce moule et une zone située au-dessus de la base du bouchon et de ladite zone frangible ;
- on écarte de la paroi extérieure en regard de la capsule transversalement à l'axe de celle-ci, ladite seconde pièce du moule ; et,
- on termine le démoulage par une éjection finale, par l'intérieur de la capsule, suivant un mouvement de déplacement sensiblement parallèle à son axe.

De cette manière, ou va pouvoir démouler aisément la forme à cran très marqué de la saillie annulaire interne, ceci tout à fait indépendamment de la manière dont sera par ailleurs réalisée la zone frangible, c'est-à-dire que celle-ci soit réalisée au moment du moulage du dispositif, ou après démoulage.

D'autres caractéristiques et avantages de l'invention apparaîtront encore de la description qui va suivre faite en référence aux dessins annexés dans lesquels :
- la figure 1 montre une vue de face, moitié en coupe, moitié en vue extérieure, d'une capsule ou dispositif de bouchage conforme à l'invention comportant le bouchon et sa bague de verrouillage moulés en une seule pièce, telle qu'est la capsule lorsqu'elle est prête au montage sur une bouteille ;
- la figure 2 montre la capsule de la figure 1 après positionnement sur le col du récipient qu'elle doit venir boucher, la bague de sécurité étant alors verrouillée sous la collerette du flacon ;
- la figure 3 montre en vue agrandie le détail de réalisation repéré III sur la figure 1 ;
- la figure 4 montre schématiquement le moule et son procédé de mise en oeuvre permettant la fabrication monobloc de la capsule : et.

Les figures 5, 6 et 7 représentent des demi-vues en coupe de détail du dispositif de la figure 1 lors de sa mise en place sur le col du récipient.

En se référant aux dessins, on aperçoit la capsule en matière plastique (par exemple polypropylène ou polyéthylène) de l'invention désignée, dans son ensemble, par la référence 1, comportant le bouchon 2 et la bague de verrouillage ou de sûreté 3. Le bouchon et la bague sont réunis par des pontets de jonction 4 séparés par des fentes périphériques 5. Les pontets 4 sont sensiblement régulièrement répartis sur toute la périphérie de la capsule dans un plan sensiblement perpendiculaire à l'axe général 1a de celle-ci. De manière classique, ces pontets 4 constituent une zone de liaison à faible résistance mécanique, frangible, et qui permet donc, avant première ouverture de la capsule, de relier entre eux la base ou partie inférieure 6 du bouchon à la partie supérieure de la bague de sûreté 3.

En dessous, cette bague de sécurité comporte tout d'abord, sur sa paroi externe, une première saillie annulaire ou bourrelet périphérique externe 7 qui, vu du haut de la bague vers le bas (c'est-à-dire en s'éloignant du bouchon 2), présente d'abord une pente 8 faisant un angle aigu α ouvert vers le bas par rapport à l'axe 1a de la capsule, puis revient vers l'intérieur à l'endroit d'une face 9 transversale à cet axe. D'une manière générale, on donnera à la pente 8 un angle tel que 15° < α < 90°. Toutefois, on conseille un angle 45° < α < 90°, de manière que lors du premier engagement de la capsule "inviolée" sur son flacon de réception, la bande 3 vienne, au passage de la collerette du flacon, s'appuyer par cette pente 8 sous la base du bouchon, par déformation forcée vers l'extérieur de la bande, soulageant d'autant les pontets 4.

A l'opposé, la paroi interne de la bague présente d'abord une pente sensiblement parallèle à l'axe 1a, laquelle pente s'infléchit sensiblement à partir du niveau de la face 9, en une pente 12 formant un angle aigu β ouvert vers le haut par rapport à l'axe 1a pour amorcer un second bourrelet périphérique ou saillie annulaire interne 13 que présente donc la bague à un niveau d'élévation inférieur à celui du bourrelet extérieur 7. En pratique, l'angle β sera tel que O° ≤ β ≤ 45°.

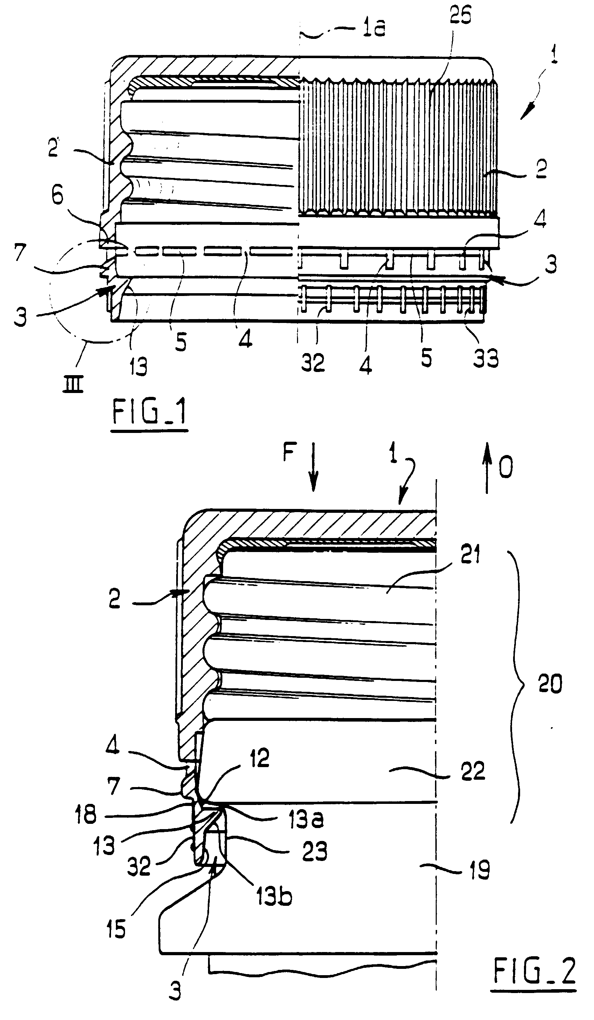

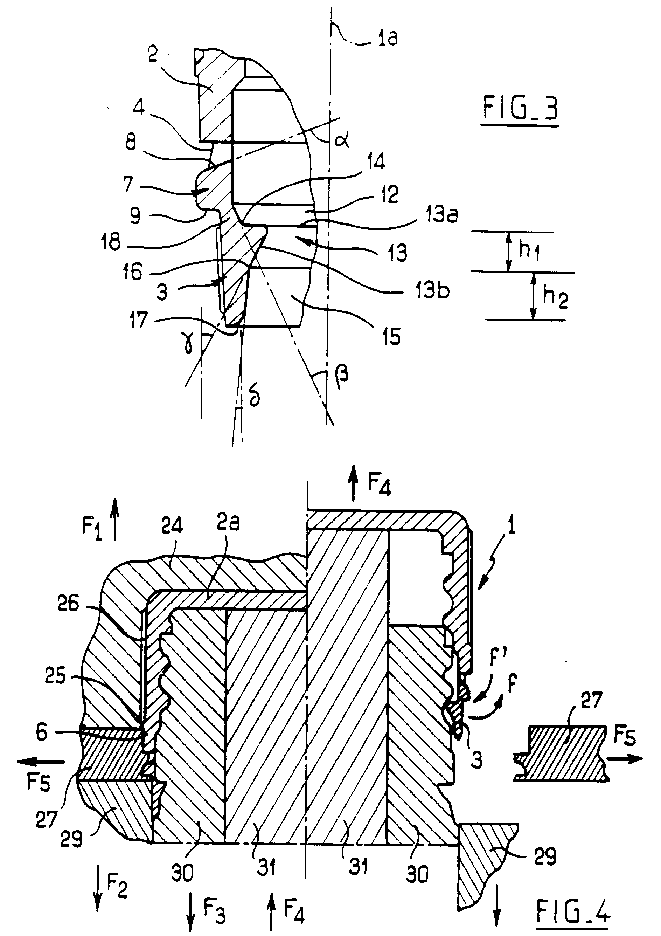

On remarquera, en particulier sur les figures 2 et 3, que la face supérieure 13a (la plus proche du bouchon) de la saillie interne 13 est normale ou quasi normale à l'axe 1a, de manière à définir là un net cran d'accrochage, cette face 13a se raccordant d'ailleurs à la pente "d'amorçage" 12 par un angle 14 marqué, proche de l'angle vif (mais ne l'atteignant pas, compte tenu essentiellement de la réalisation en matière plastique moulée de la pièce).

En dessous, la saillie interne 13 se poursuit par une pente 13b faisant un angle aigu γ (20° < γ < 60°), ouvert vers le bas, par rapport à l'axe 1a, cette pente se raccordant elle-même, en partie inférieure, à une pente 15 d'inclinaison différente avec un angle δ (0° < δ < 20°) plus fermé que l'angle, de telle manière qu'à partir de son ouverture inférieure de base, la capsule, et, plus précisément, la bague 3, présente un double tronc dc cône 15/13b à double pente raccordées l'une à l'autre par un angle 16 marqué, le tronc de cône 15 se terminant lui-même, à l'extrémité inférieure libre 3a de la bague par un arrondi 17 de raccordement à la paroi extérieure. Avantageusement, les hauteurs h1, h2, projetées parallèlement à l'axe 1a des deux pentes 13b et 15, respectivement, seront sensiblement égales, en considérant la pente 15 comme s'arrêtant au début de l'arrondi 17.

Sur les figures 2 et 3, on remarquera encore la relative finesse de la bande de matière élastiquement déformable 18 qui relie obliquement les deux bourrelets ou saillies externe 7 et interne 13 qui constituent des zones rigides et dont la forme et l'épaisseur sont précisément adaptées, pour assurer une fabrication optimale de la bague en favorisant en particulier les opérations de démoulage, tout en permettant à cette bague d'être déformée de manière contrôlée lors de son engagement sur le récipient.

Pour la mise en place de cette capsule 1 sur le flacon ou récipient 19 représenté sur la figure 2, il suffit d'ailleurs d'appliquer à force, dans le sens de la flèche F, la capsule sur le col 20 de ce flacon, tout en la vissant. Le bouchon 2, intérieurement taraudé vient ainsi prendre place sur le filetage du flacon que l'on aperçoit on 21. Guidée et centrée par sa double pente d'engagement 13b/15, la bague 3 glisse tout d'abord on s'écartant au passage de la collerette saillante 22 du flacon, jusqu'à venir se verrouiller élastiquement sous cette collerette par l'intermédiaire de la saillie 13 qui en pratique viendra alors intérieurement de préférence sensiblement tangenter la paroi extérieure de diamètre réduit 23 du col 20. En d'autres termes, la saillie 13 présente avantageusement un diamètre intérieur sensiblement égal au diamètre extérieur de ce col à l'endroit de la paroi 23.

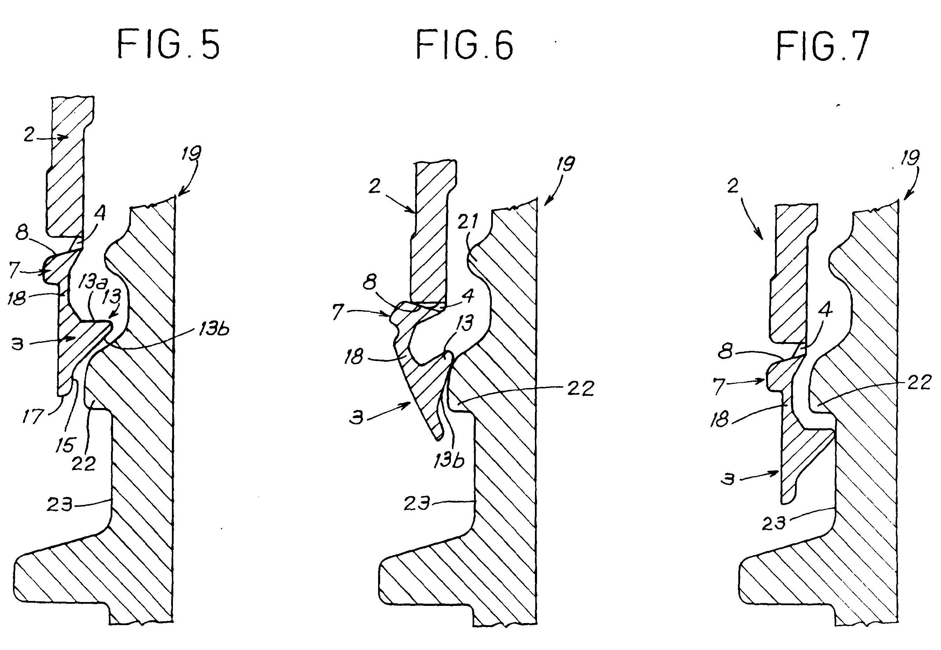

La mise en place de la capsule 1 sur le flacon 19 sera décrite en détail plus loin en référence aux figures 5, 6 et 7.

Lors de la première ouverture du flacon, il suffit de dévisser le bouchon 2, ce qui l'amène à se déplacer dans le sens de la flèche 0 de la figure 2, provoquant ainsi, par cisaillement et arrachement, la rupture des ponts 4 de jonction, qui vont d'ailleurs pouvoir se rompre en partie supérieure au niveau de leur raccordement au bouchon, compte tenu du procédé de fabrication général de la capsule qui peut leur assurer une section plus faible côté bouchon.

Sur la figure 4, on voit que la fabrication par moulage d'une telle capsule est particulièrement simple, ne faisant appel qu'à un moule comportant un nombre limité de pièces, avec deux mouvements de déplacement, dans le sens de l'axe la de la capsule et transversalement à cet axe (flèches F5).

De façon précise, le moule comprend ainsi une empreinte extérieure 24 pour la partie extérieure du bouchon 2 jusqu'au petit épaulement 25 que le bouchon présente à la base de ses fines cannelures extérieures 26. Sous l'empreinte 24, est disposé un bloc 27 pour le moulage de la forme extérieure de la base 6 du bouchon et de la bague 3 jusqu'à sensiblement à mi-longueur de sa bande de jonction 18 (voir figures 2 et 3). Toujours extérieurement, sous le bloc 27, s'étend un autre bloc 29 pour le moulage de la paroi extérieure de la partie basse de la bague. A l'intérieur, un piston ou broche interne 30 assure le moulage de la partie intérieure de la paroi supérieure transversale de fermeture 2a du bouchon, ainsi que toute l'empreinte intérieure latérale de la capsule, depuis le haut du bouchon jusqu'à la base de la bague, un éjecteur central 31 complétant le tout et assurant notamment le moulage interne de la partie centrale de la paroi 2a.

La pièce étant moulée dans la position illustrée sur la partie gauche de la figure 4, toutes pièces du moule fermées, on procède au démoulage de la capsule en effectuant successivement les operations suivantes :
- ouverture du moule, par recul parallèlement à l'axe 1a, dans le sens de la flèche F1, de l'empreinte 24,
- recul relatif, à contresens, toujours parallèlement à l'axe 1a, du bloc 29, dans le sens de la flèche F2, libérant ainsi à l'extérieur la zone située en regard de la partie basse de la bague 3,
- recul du piston 30 dans le sens de la flèche F3, en même temps que l'on pousse vers le haut sur l'éjecteur central 31 dans le sens de la flèche F4 et que l'on accompagne la capsule dans ce mouvement axial via le bloc intermédiaire 27, ceci sur une longueur suffisante pour exercer sur la bague 3 un couple centré au niveau de sa bande de liaison 18 assurant ainsi l'articulation avec rotation vers l'extérieur de toute la parte de la bague située en dessous de cette bande 18, et donc le démoulage de la saillie interne 13,
- dès que cette partie de bague est suffisamment écartée vers l'extérieur (flèche f. on procède à un écartement latéral sensiblement perpendiculairement à l'axe 1a du bloc 27, dans le sens des flèches F5,
- et on finit enfin l'éjection en poursuivant le déplacement axial dc l'éjecteur 31 dans le sens de la flèche F4, la bague 3 reprenant progressivement sa forme (flèche f').

On notera qu'éventuellement la capsule 1 pourrait être moulée de manière à présenter en partie inférieure, et notamment à partir de la base de sa bande 18 jusqu'à proximité de son bord inférieur libre, d'étroites nervures extérieures 32 (voir figures 1 et 2) s'étendant sur tout le pourtour de la bague, de préférence sensiblement parallèlement à l'axe la, ces nervures de rigidification 32 pouvant être complétées par une ou plusieurs nervures annulaires 33 (voir figure 1) intersectant les nervures 32.

Concernant la réalisation des pontets 4, voire de toute autre forme de la zone de liaison frangible entre le bouchon et la bague, on notera que, compte tenu de la présence, sur le moule, du bloc à déplacement essentiellement transversal 27, la question souvent critique de la possible fragilisation excessive de cette zone au moment du démoulage n'existe pas dans l'invention, la technique de fabrication imaginée ici ne s'étant pas particulièrement intéressée à cette question.

D'ailleurs, on pourrait tout à fait envisager de ne conformer cette zone, (et donc en particulier les pontets 4), qu'après démoulage total de la capsule, lors d'une opération de reprise de celle-ci sur une machine de découpe à couteaux pour les ouvertures 5 et munis d'encoches pour les pontets. Si l'on préfère malgré tout réaliser ces pontets au cours du moulage, on notera encore qu'en pratique toute forme on dépouille ou contre-dépouille (à l'image notamment de la figure 3) pourra leur être donnée.

Bien entendu, différentes-variantes de réalisation de l'invention pourraient être envisagées. En particulier, on pourrait prévoir qu'après rupture des pontets 4, la bague 3 ne demeure pas sur le récipient, mais parte avec le bouchon.

Pour cela, on pourrait prévoir d'adjoindre aux pontets un lien plus solide reliant le bouchon et la bague d'inviolabilité, ce pont supplémentaire de matière étant complété latéralement, de part et d'autre, par deux amorces de rupture qui feraient, l'une ou l'autre, se rompre la bague qui passerait ainsi librement l'obstacle de la collerette du récipient.

Les figures 5, 6 et 7 représentent trois phases de la mise en place de la capsule 1 sur le flacon 19.

Dans la position de la figure 5, la face inférieure à double pente 13b/15 de la bague 3 vient en contact d'appui contre la face supérieure de la collerette 22 du flacon 19.

Dans la position de la figure 6, le vissage du bouchon taraudé 2 sur le filetage 21 du col 20 du flacon 19 entraine la descente de la capsule 2.

La descente s'accompagne de la déformation contrôlée de la bague 3 au contact de la collerette 22 du flacon.

Cette déformation contrôlée consiste ce un écrasement des pontets 4 associé à un cintrage vers l'extérieur de la bande annulaire de jonction 18 qui s'écarte alors de la collerette 22 formant ainsi une articulation permettant la rotation de la saillie interne 13 qui pivote vers le haut ce s'écartant de l'axe du bouchon.

Le cintrage de la bande de jonction déformable 18 se poursuit jusqu'à ce que la pente 8 de la saillie annulaire extérieure 7 vienne en butée contre le bord inférieur du bouchon 2.

Dans cette position, la face inférieure 13b de la saillie interne 13 est sensiblement verticale tandis que la face extérieure de la partie inférieure de la bague est inclinée vers l'axe du bouchon. La largeur et l'inclinaison α de la face en pente 8 de la saillie externe 7 sont donc déterminées en fonction de l'épaisseur du bord inférieur du bouchon 2 de façon à contrôler et à limiter le cintrage de la bande de jonction déformable 18. On évite ainsi la détérioration des pontets 4 tout en permettant l'escamotage de la saillie interne 13. La bague 3 est alors sous contrainte.

En poursuivant le vissage, on fait glisser la face inférieure 13b de la saillie interne 13 le long de la collerette 22 jusqu'à ce que l'extrémité de la saillie 13 passe sous ladite collerette. La bague 3 est alors rappelée dans sa position initiale de repos par la détente de la bande de jonction 18 comme dans la phase représentée sur la figure 7.

Cette détente s'accompagne du relâchement des pontets 4 et du retour de la face extérieure de la partie inférieure de la bague 3 dans une position sensiblement parallèle à l'axe du bouchon.

## Revendications

1. Dispositif ou capsule de bouchage pour récipient (19) à collerette saillante (22), comprenant :
- un bouchon taraudé (2) ;
- une bague d'inviolabilité (3) ;
- des pontets de jonction (4) reliant, avant première ouverture de la capsule (1), le bouchon taraudé (2) à la bague d'inviolabilité (3) ; ces pontets de jonction (4) étant régulièrement répartis sur toute la circonférence de la capsule (1), et étant séparés par des fentes périphériques (5), formant ainsi une zone de liaison à faible résistance mécanique ;
ladite bague d'inviolabilité (3) comportant :
- un bourrelet périphérique externe (7) comportant une pente formant face supérieure (8) de la bague (3) et formant un angle (α) aigu par rapport à l'axe (1a) de la capsule ;
- une saillie annulaire interne (13) dont la face supérieure 13(a) est normale ou sensiblement normale à l'axe 1(a) de la capsule ;
- une bande annulaire déformable (18) reliant le bourrelet périphérique externe (7) et la saillie annulaire interne (13) ;
ledit dispositif de bouchage étant caractérisé en ce que la saillie annulaire interne (13) présente une face inférieure (13b) formant un angle aigu (γ) ouvert vers le bas, par rapport à l'axe (1a) de la capsule, cet angle étant compris entre 20° et 60°, cette face inférieure (13b) se raccordant, en direction du bord libre inférieur de la bague d'inviolabilité (3) à une pente (15) de précentrage faisant avec l'axe (1a) de la capsule (1) un angle (δ) plus fermé que l'angle (γ) et compris entre 0° et 20°, les hauteurs (h1) et (h2) de la pente de précentrage (15) et de ladite face inférieure (13b) de la saillie (13), mesurées parallèlement à l'axe (1a) étant sensiblement égales ;
de sorte que la bague (3) présente un double tronc de cône (15/13b) à double pente raccordées l'une à l'autre par angle (16) marqué, le tronc de cône (15) se terminant lui-même à l'extrémité inférieure (3a) de la bague (3) par un arrondi (17) de raccordement avec la paroi extérieure de la bague (3), la face supérieure (13a) de la saillie (13) se raccordant par un angle marqué (14) proche de l'angle vif, à la pente (12) de la bande (18),
de telle sorte que lors du premier vissage du bouchon sur le récipient (19), dès que la face supérieure (8) du bourrelet (7) est en butée sous le bord inférieur du bouchon (2), la bague (3) subit, en appui sur la collerette (22), une déformation contrôlée de la bande annulaire de jonction (13) formant articulation et consistant en une rotation de la partie inférieure de la bague (3) vers l'axe (1a)du bouchon (2) pour orienter la saillie (13) vers le haut et permettre son escamotage.

2. Dispositif selon la revendication 1, caractérisé on ce que ledit bourrelet périphérique externe (7) est de largeur sensiblement égale à l'épaisseur du bord inférieur (6) du bouchon (2), la face interne de ladite bande annulaire déformable (18) comportant une pente (12) formant un angle aigu β par rapport à l'axe (1a), cet angle β étant ouvert vers le haut et compris entre 0 et 45°,
ladite saillie annulaire interne (13) comportant une face supérieure (13a) sensiblement normale à l'axe (1a) de la capsule (1).

3. Dispositif selon la revendication 1 ou 3, caractérisé en ce qu'extérieurement, en dessous dudit bourrelet périphérique externe (7), la bague d'inviolabilité (3) présente d'étroites nervures de renforcement (32) s'étendant sensiblement parallèlement à l'axe (1a).

4. Procédé de fabrication par moulage à injection d'un dispositif de bouchage selon l'une quelconque des revendications 1 à 3, caractérisé en ce qu'après avoir moulé on une seule pièce le dispositif, on réalise, au cours du démoulage, les opérations suivantes :
- on écarte de la paroi extérieure en regard de la bague d'inviolabilité (3), une première pièce (29) extérieure du moule s'étendant depuis un niveau infériuer au bord inférieur libre deladite bague (3) jusqu'à un niveau intermédiaire entre ceux de ladite saillie interne (13) et dudit bourrelet (7) de cette bague,
- on exerce un couple à l'endroit de ladite bande annulaire (18) déformable de la bague (3), pour faire pivoter vers l'extérieur ladite saillie interne (13), au moyens d'une seconde pièce (27) du moule alors plaquée contre la paroi extérieure de la bague d'inviolabilité située entre ledit niveau supérieur de ladite première pièce (29) de ce moule et une zone située au-dessus de la base (6) du bouchon,
- on écarte de la paroi extérieure en regard du dispositif (1), et transversalement à l'axe (1a) de celui-ci, ladite seconde pièce (27) du moule,
- et on termine par une éjection finale par l'intérieur du dispositif de bouchage (1) suivant un mouvement de déplacement sensiblemnet parallèle à son axe.

## Claims

1. A closure device or capsule for container (19) with protruding flange (22), comprising:
- an internally threaded cap (2);
- a tamperproof ring (3)
- joining bridges (4) connecting, before the first opening of the capsule (1), the internally threaded cap (2) to the tamperproof ring (3); these joining bridges (4) being regularly distributed around the whole circumference of the capsule (1), and being separated by peripheral gaps (5), thus forming a junction zone with low mechanical strength.
The said tamperproof ring including:
- a peripheral external bulge (7) including a sloped part forming the upper face (8) of the ring (3) and forming an acute angle (α) with respect to the axis (1a) of the capsule;
- an internal annular protrusion (13) the upper face (13a) of which is normal or substantially normal to the axis (1a) of the capsule;
- a deformable annular strip (18) connecting the peripheral external bulge (7) and the internal annular protrusion (13);
the said closure device being characterized in that the annular internal protrusion (13) has a lower face (13b) which forms an acute angle (γ) open downwards, with respect to the axis (1a) of the capsule, this angle being between 20°and 60°, this lower face (13b) being connected in the direction of the lower free edge of the tamperproof ring (3) to a pre-centring guide slope (15) forming with the axis (1a) of the capsule (1) an angle (δ) which is more closed than the angle (γ) and is comprised between 0° and 20°, the heights (h1) and (h2) of the pre-centring guidance slope(15) and of the said lower face (13b) of the protrusion (13), measured parallel with the axis (1a) being substantially equal;
so that the ring (3) has a double truncated cone (15/13b) with a double slope, the slopes being connected together by a pronounced angle (16), the truncated cone (15) itself ending at the lower end of the ring (3) in a rounded part (17) connecting it with the outer wall of the ring (13), the upper face (13a) of the protrusion (13) by a marked angle (14) close to a sharp angle, to the slope (12) of the strip (18),
so that when the cap is first screwed on the container (19), as soon as the upper face (8) of the bulb (7) abuts the lower edge of the cap (2), the ring (3) undergoes, while resting on the neck (22), a controlled deformation of the annular junction strip (18) forming a joint and consisting in a rotation of the lower part of the ring (3) towards the axis (1a) of the cap (2) to point the protrusion (13) upwards and to enable it to be retracted.

2. A device according to claim 1, characterized in that the said peripheral external bulge (7) has a width substantially equal to the thickness of the lower edge (6) of the cap (2), the inner face of the said deformable annular strip (18) including a slope (12) forming an acute angle (β) with respect to the axis (1a), this angle (β) being open upwards and comprised between 0° and 45°,
the said internal annular protrusion including an upper face (13a) substantially normal to the axis (1a) of the capsule (1).

3. A device according to claim 1 or 2, characterized in that on the outside, below the said peripheral external bulge (7), the tamperproof ring has narrow reinforcing ribs (32) extending substantially parallel to the axis (1a).

4. A method of manufacturing by injection moulding of a closure device according to any of claims 1 to 3, characterized in that after having moulded the device in one piece, the following operations are carried out during removal from the mould:
- a first external part (29) of the mould, extending from a level lower than the lower free edge of the said ring (3) to a level intermediate between those of the said internal protrusion (13) and of the said bulge of this ring, is moved apart from the outer wall opposite the tamperproof ring (3),
- a torque is applied at the position of the said deformable annular strip (18) of the ring (3), to cause the said internal protrusion (13) to pivot towards the outside, by means of a second part (27) of the mould which is then pressed against the outer wall of the tamperproof ring situated between the said upper level of the said first piece (29) of this mould and a zone situated above the base (6) of the cap,
- the said second part (27) of the mould, opposite the device (1) and transversely to its axis (1a) is moved apart from the outer wall,
- and the method is completed by final ejection from within of the closure device following a movement substantially parallel to its axis.

## Patentansprüche

1. Verschlussvorrichtung oder -kapsel für Behälter (19) mit auskragendem Rand (22), mit :
- einem Verschluss mit Innengewinde (2) ;
- einem Unverletzbarkeitsring (3) ;
- Verbindungsstegen (4), die vor dem ersten Öffnen der Kapsel (1) den Verschluss mit Innengewinde (2) mit dem Unverletzbarkeitsring (3) verbinden ; wobei diese Verbindungsstege (4) regelmässig über den ganzen Umfang der Kapsel (1) verteilt und durch periphäre Schlitze (5) getrennt sind und damit einen Verbindungsbereich mit geringer mechanischer Festigkeit bilden ;
wobei der besagte Unverletzbarkeitsring (3) ;
- einen periphären externen Wulst (7) mit einer Schräge umfasst, der die Oberseite (8) des Rings (3) bildet sowie einen spitzen Winkel (α) in Bezug auf die Achse (1a) der Kapsel ;
- eine ringförmige interne Auskragung (13) aufweist, deren Oberseite (13a) normal oder etwa normal zur Achse (1a) der Kapsel verläuft ;
- einen ringförmigen verformbaren Streifen (18) aufweist, der den periphären externen Wulst (7) und die ringförmige interne Auskragung (13) verbindet ;
wobei die Verschlussvorrichtung dadurch gekennzeichnet ist, dass die ringförmige interne Auskragung (13) eine Unterseite (13b) aufweist, die einen nach unten geöffneten, in Bezug auf die Achse (1a) der Kapsel spitzen Winkel (γ) bildet, wobei dieser Winkel zwischen 20° und 60° beträgt, wobei sich diese Unterseite (13b) in Richtung des freien unteren Rands des Unverletzbarkeitsrings (3) an eine Vorzentrierschräge (15) anschliesst, die mit der Achse (1a) der Kapsel (1) einen geschlosseneren Winkel (δ) als der Winkel (γ) bildet und zwischen 0° und 20° beträgt, wobei die Höhen (h1) und (h2) der besagten Vorzentrierschräge (15) und der besagten Unterseite (13b) der Auskragung (13) parallel zur Achse (1a) gemessen etwa gleich sind ;
so dass der Ring (3) einen doppelten Kegelstumpf (15/13b) mit doppelter Schräge aufweist, die über einen markierten Winkel (16) miteinander verbunden sind, während der Kegelstumpf (15) selbst am unteren Ende (3a) des Rings (3) mit einer Abrundung (17) endet, um an die Aussenwand des Rings (3) angeschlossen zu werden, wobei die Oberseite (13a) der Auskragung (13) über einen markierten Winkel (14) in der Nähe des spitzen Winkels an der Schräge (12) des Streifens (18) angeschlossen wird,
so dass beim ersten Schrauben des Verschlusses auf dem Behälter (19), sobald sich die Oberseite (8) des Wulstes (7) am Anschlag unter dem unteren Rand des Verschlusses (2) befindet, der gegen den Rand (22) abgestützte Ring (3) von einer kontrollierten Verformung des ein Gelenk bildenden ringförmigen Verbindungsstreifens (18) beaufschlagt wird, wobei diese Verformung in einer Drehung des Unterteils des Rings (3) zur Achse (1a) des Verschlusses (2) hin besteht, um die Auskragung (13) nach oben zu richten und ihre Versenkung zu ermöglichen.

2. Vorrichtung nach Anspruch 1, dadurch gekennzeichnet, dass der besagte periphäre externe Wulst (7) etwa die gleiche Breite aufweist wie die Dicke des unteren Rands (6) des Verschlusses (2), wobei die Innenseite des besagten ringförmigen verformbaren Streifens (18) eine Schräge (12) aufweist, die in Bezug auf die Achse (1a) einen spitzen Winkel (β) bildet, wobei dieser Winkel (β) nach oben geöffnet ist und zwischen 0 und 45° beträgt,
wobei die besagte ringförmige interne Auskragung (13) eine Oberseite (13a) aufweist, die etwa normal zur Achse (1a) der Kapsel (1) verläuft.

3. Vorrichtung nach Anspruch 1 oder 3, dadurch gekennzeichnet, dass der Unverletzbarkeitsring (3) aussen, unter dem besagten periphären externen Wulst (7) schmale Verstärkungsrippen (32) aufweist, die sich etwa parallel zur Achse (1a) erstrecken.

4. Spritzformverfahren zur Herstellung einer Verschlussvorrichtung nach einem der Ansprüche 1 bis 3, dadurch gekennzeichnet, dass man nach dem Formen der Vorrichtung in einem einzigen Stück beim Ausformen die folgenden Arbeitsgänge durchführt :
- man spreizt von der dem Unverletzbarkeitsring (3) gegenüberliegenden Aussenwand ein ersten Aussenteil (29) der Form ab, das sich von einer unteren Ebene am unteren freien Rand des besagten Ring (3) bis zu einer Zwischenebene zwischen denjenigen der besagten internen Auskragung (13) und des besagten Wulstes (7) dieses Rings erstreckt,
- man übt auf den besagten ringförmigen verformbaren Streifen (18) des Rings (3) ein Moment aus, um die besagte interne Auskragung (13) nach aussen zu drehen, mittels eines zweiten Teils (27) der Form, das dabei gegen die Aussenwand des Unverletzbarkeitsrings gedrückt wird, die sich zwischen der besagten oberen Ebene des besagten ersten Teils (29) dieser Form und einer über der Basis (6) des Verschlusses gelegenen Zone befindet,
- man spreizt von der der Vorrichtung (1) gegenüberliegenden und quer zur Achse (1a) derselben verlaufenden Aussenwand das besagte zweite Teil (27) der Form ab,
- und man endet mit einem letzten Auswurf von innen der Verschlussvorrichtung (1), indem man eine etwa parallel zu ihrer Achse verlaufende Verschiebungsbewegung ausführt.
